# EUROPEAN PATENT SPECIFICATION

(11) **EP 3 055 913 B1**
(45) Date of publication and mention of the grant of the patent: **25.07.2018**
(21) Application number: 14796919.0
(22) Date of filing: 03.10.2014
(51) Int. Cl.: H02G 3/06, H02G 3/04

(54) **MULTI-MEMBER CHANNEL BAR**
MEHRTEILIGE KANALSCHIENE
BARRE CANAL MULTI-ÉLÉMENT

(30) Priority: 08.10.2013 PL 40557413
(43) Date of publication of application: 17.08.2016
(73) Proprietor: Sielski, Kazimierz, 05-480 Karczew (PL)
(72) Inventor: Sielski, Kazimierz, 05-480 Karczew (PL)
(74) Representative: Slominska-Dziubek, Anna
(86) International application number: PCT/PL2014/050062
(87) International publication number: WO 2015/053643

(56) References cited:
- WO-A2-2013/015755
- DE-U1-202004 019 942
- US-A- 4 566 819
- US-A- 6 004 063
- US-B1- 6 932 195

## Description

The invention relates to a multi-member channel bar consisting of members adapted to be combined in a series of any length to form an individual channel bar, used as a passageway for power and telecommunications cables, as well as for use in construction.

So far, channel bars have been joined in series by means of additional connectors that were attached with screws. Polish utility model application W - 120422, published in the Polish Patent Office Bulletin, No 8/2013, describes a connector of cable trays allowing suspension of cable trays forming two crossing cable routes. The connector is in the shape of a rectangular prism and comprises through-holes which form an upper channel and a lower channel for fastening cable trays. The inlets and outlets to and from the upper and the lower channel have tongues with holes for fixing the cable trays.
WO 2013/015755 discloses a multi-member channel bar, comprising superimposable members, each having a first superimposable connecting section and a second widened superimposable connecting section, and slide-in members, each having an inner slide-in connecting section and a widened slide-in connecting section. The superimposable members and slide-in members are connected to each other in series, respectively, to form the multi-member channel bar.

The object of the invention is to provide a multi-member channel bar for quick and stable linking of members in series of any length in different directions. According to the invention it is provided a multi-member channel bar which is defined in claim 1. Further characteristics of the multi-member channel bar are defined in dependent claim 2.

A multi-member channel bar according to the invention, comprising oval openings along its entire length and provided with a connector in the shape of a rectangular prism having through-holes extending in crossing directions, is characterized in that it comprises superimposable members, each having an upper superimposable connecting section and a widened lower superimposable connecting section, and slide-in members, each having an inner slide-in connecting section and a widened slide-in connecting section.

Each superimposable member of the channel bar, at its widened lower superimposable connecting section, has a tongue provided with a latch and above the tongue there are formed cut-outs for leading projections of the upper superimposable connecting section and below the tongue there are leading projections, while each superimposable member, at its upper superimposable connecting section, has leading projections at its top and under the leading projections there is an opening and below the opening there are holes for the leading projections of the widened lower superimposable connecting section.

Each slide-in member at its widened slide-in connecting section, has projections and cut-outs, and, at its inner slide-in connecting section, it has projections and cut-outs.

The present invention is illustrated in details in the embodiments in the accompanying drawings, in which:

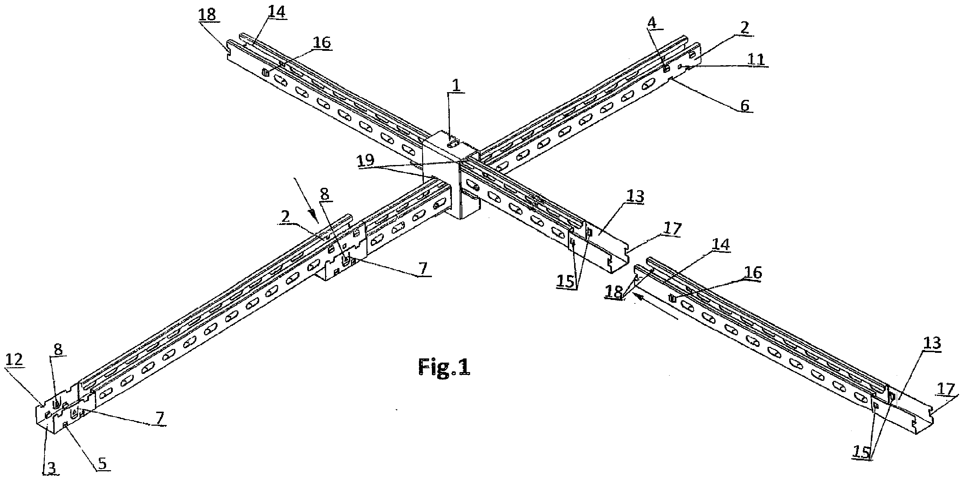

fig. 1 presents an isometric view of a multi-member channel bar arranged at right angle, during connection,

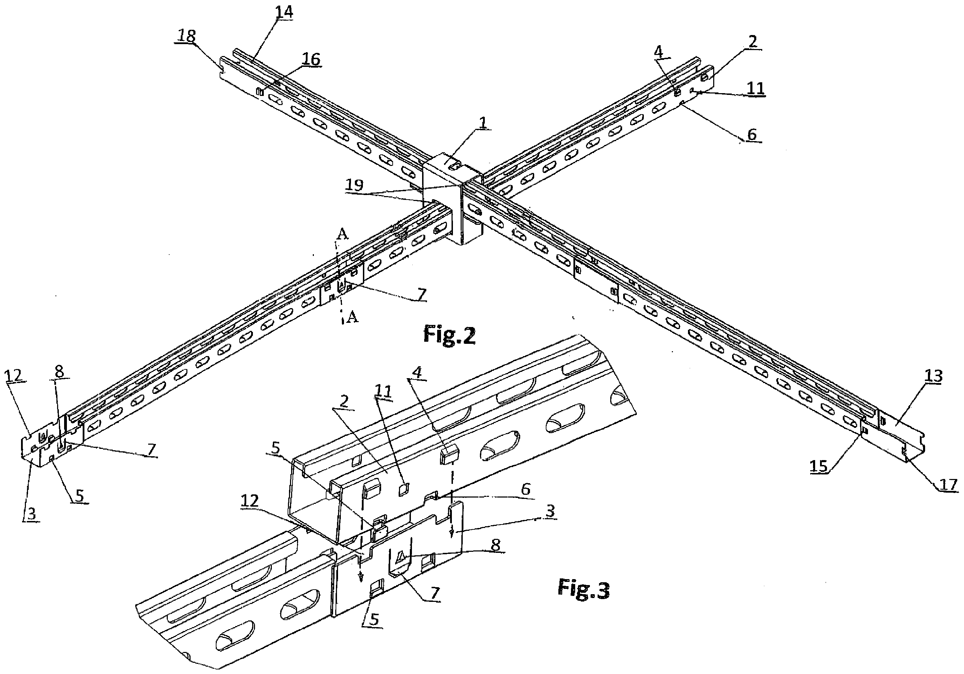

fig. 2 presents an isometric view of the multi-member channel bar after connection,
fig. 3 presents a superimposable connecting sections of the channel bar members during connection,

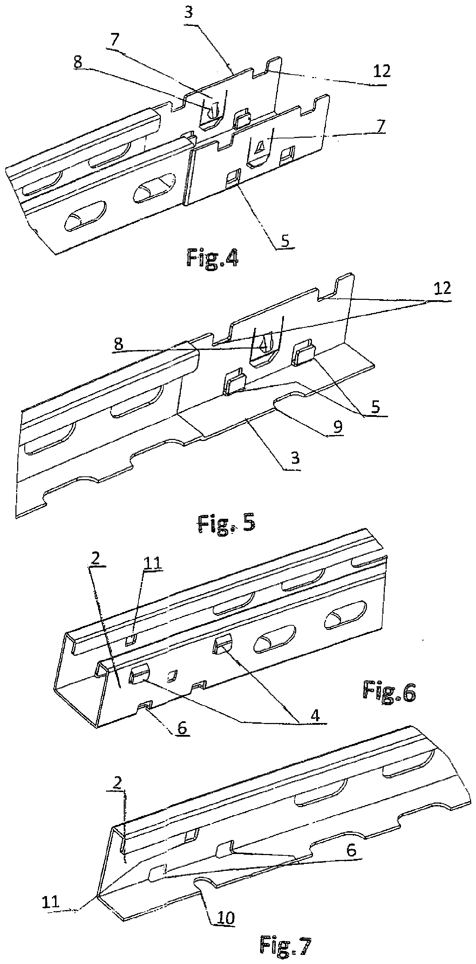

fig. 4 presents a widened lower superimposable connecting section of the channel bar member,
fig. 5 presents a longitudinally cut widened lower superimposable connecting section of the channel bar member, in view from the inside,
fig. 6 presents an upper superimposable connecting section of the channel bar member,
fig. 7 presents a longitudinally cut upper superimposable connecting section of the channel bar member, in view from the inside, and

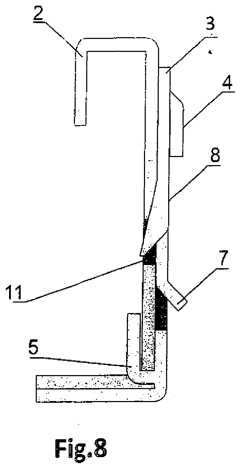

fig. 8 presents a view of the superimposable connecting sections of the channel bar member, after connection, in cross-section along line A - A of fig. 2.

A multi-member channel bar comprises a connector 1 in the shape of a rectangular prism having through-holes 19 extending in crossing directions and designed for fastening channel bar members connected in series, and the multi-member channel bar further comprises superimposable members having superimposable connecting sections and slide-in members having slide-in connecting sections.

Each superimposable member is provided with the widened lower superimposable connecting section 3 and upper superimposable connecting section 2. The widened lower superimposable connecting section 3 is provided with cut-outs 12 designed for engaging with leading projections 4 provided in the upper superimposable connecting section 2. Under the cut-outs 12 the widened lower superimposable connecting section 3 has a tongue 7 with a latch 8 and below the tongue 7 there are leading projections 5.

The leading projections 4 of the upper superimposable connecting section 2 are provided at the top thereof and under the leading projections 4 there is an opening 11 for the latch 8 of the widened lower superimposable connecting section 3, while below the opening 11 there are made holes 6 for engaging the leading projections 5 of the widened lower superimposable connecting section 3.

Mounting holes 9 are formed in the base of the widened lower superimposable connecting member 3 and mounting holes 10 are formed in the base of the upper superimposable connecting member 2.

Each slide-in member has projections 15 and cut-outs 17 at its widened slide-in connecting section 13 and it has projections 16 and cut-outs 17 at its internal slide-in connecting section 14.

When combining members of the channel bar, the upper superimposable connecting section 2 is placed above the widened lower superimposable connecting section 3. The leading projections 4 of the upper superimposable connecting section 2 are received in the cut-outs 12 of the widened lower superimposable connecting section 3 . The leading projections 5 of the lower superimposable connecting section 3 are received in the holes 6 of the upper superimposable connecting section 2. The latch 8 is locked in the opening 11 of the upper superimposable connecting section 2. The mounting holes 9 of the widened lower superimposable connecting section 3 and the mounting holes 10 of the upper superimposable connecting section 2 are used to attach the superimposable connecting sections.

When combining the slide-in members of the channel bar the inner slide-in connecting section 14 is inserted horizontally into the widened slide-in connecting section 13. The projections 16 in the inner slide-in connecting section 14 are received in the cut-outs 17 of the widened slide-in connecting section 13, whereas the projections 15 of the widened slide-in connecting section 13 are received in the cut-outs 18 of the inner slide-in connecting section 14.

## Claims

1. A multi-member channel bar, comprising openings along its entire length and provided with a connector (1) in the shape of a rectangular prism having through-holes (19) extending in crossing directions, and comprising superimposable members, each having an upper superimposable connecting section (2) and a widened lower connecting section (3), and slide-in members, each having an inner slide-in connecting section (14) and a widened slide-in connecting section (13), **characterized in that** each superimposable member, at its widened lower superimposable connecting section (3), has a tongue (7) provided with a latch (8) and cut-outs (12) formed above the tongue (7) and leading projections (5) formed below the tongue (7), while each superimposable member, at its upper superimposable connecting section (2), has leading projections (4) under which there is an opening (11) for the latch (8) and below the opening (11) there are holes (6), wherein when combining members of the channel bar, upper superimposable connecting section (2) is placed above the widened lower superimposable connecting section (3); the leading projections (4) of the upper superimposable connecting section (2) are received in the cut-outs (12) of the widened lower connecting section (3); the leading projections (5) of the lower superimposable connecting section (3)are received in the holes (6) of the upper superimposable connecting section (2); the latch (8) is locked in the opening (11) of the upper superimposable connecting part (2).

2. The channel bar according to claim 1 **characterized in that** each slide-in member at its widened connecting section (13), has projections (15) and cut-outs (17), and, at its inner slide-in connecting section (14), it has projections (16) and cut-outs (18), wherein when combining the slide-in members of the channel bar the inner slide-in connecting section (14) is inserted horizontally into the widened slide-in connecting section (13); the projections (16) in the inner slide-in connecting section (14) are received in the cut-outs (17) of the widened slide-in connecting section (13), whereas the projections (15) of the widened slide-in connecting section (13) joinable are received in the cut-outs (18) of the inner slide-in connecting section (14).

## Patentansprüche

1. Mehrteilige Kanalschiene mit über seine Gesamtlänge angeordneten Öffnungen, umfassend einen rechteckförmigen Verbinder (1), der sich kreuzende Durchgangslöcher (19) sowie Aufsteckglieder mit jeweils einem oberen Aufsteckverbindungsabschnitt (2) und einem aufgeweiteten unteren Aufsteckverbindungsabschnitt (3) sowie Einschubglieder mit jeweils einem innenseitigen Einschubverbindungsabschnitt (14) und einem aufgeweiteten Einschubverbindungsabschnitt (13) umfasst, **dadurch gekennzeichnet, dass** jedes Aufsteckglied an seinem unteren aufgeweiteten Aufsteckverbindungsabschnitt (3) eine Zunge (7) mit einer Eingriffslasche (8) sowie oberhalb der Zunge (7) ausgebildeten Aussparungen (12) und unterhalb der Zunge (7) ausgebildeten Führungsvorsprünge (5), und an seinem oberen Aufsteckverbindungsabschnitt (2) Führungsvorsprünge (4) und eine darunter angeordnete Öffnung (11) für die Eingriffslasche (8) und unterhalb der Öffnung ausgebildete (11) Löcher (6) aufweist, wobei die Glieder des C-Profils derat verbindbar sind, dass der obere Aufsteckverbindungsabschnitt (2) über den unteren aufgeweiteten Aufsteckverbindungsabschnitt (3) angeordnet wird; die Führungsvorsprünge (4) des oberen Aufsteckverbindungsabschnitts (2) in die Aussparungen (12) des unteren aufgeweiteten Aufsteckverbindungsabschnitts (3) eingeführt werden; die Führungsvorsprünge (5) des unteren aufgeweiteten Aufsteckverbindungsabschnitts (3) in die Löcher (6) des oberen Aufsteckverbindungsabschnittts (2) eingeführt werden und die Eingriffslasche (8) in der Öffnung (11) des oberen Aufsteckverbindungsabschnitts (2) arretiert wird.

2. Mehrteilige Kanalschiene nach Anspruch 1, **dadurch gekennzeichnet, dass** jedes Einschubglied an seinem aufgeweiteten Einschubverbindungsabschnitt (13) Vorsprünge (15) sowie Aussparungen (17) und an seinem innenseitigen Einschubverbindungsabschnitt (14) Vorsprünge (16) und Aussparungen (18) aufweist, wobei die Einschubglieder des C-Profils derart verbindbar sind, dass der innenseitige Einschubverbindungsabschnitt (14) in den aufgeweiteten Einschubverbindungsabschnitt (13) horizontal eingeführt wird, Vorsprünge (16) des innenseitigen Einschubverbindungsabschnitts (14) in die Aussparungen (17) des aufgeweiteten Einschubverbindungsabschnitts (13) und Vorsprünge (15) des aufgeweiteten Einschubverbindungsabschnitts (13) in die Aussparungen (18) des innenseitigen Einschubverbindungsabschnitts (14) eingeführt werden.

## Revendications

1. Barre canal multi-élément, possédant des perçages sur toute la longueur, équipé d'un raccord orthogonal avec des perçages traversants se croisant, comportant des éléments qui s'imbriquent comprenant un raccord supérieur imbriqué (2) et un raccord élargi inférieur imbriqué (3) ainsi que des éléments s'insérant comprenant un raccord intérieur inséré (14) et un raccord élargi inséré (13), **caractérisé en ce que** chaque élément s'imbriquant sur un raccord élargi inférieur imbriqué (3) possède une languette (7) avec un cran (8) au dessus duquel sont réalisés des évidements (12), et en dessous de la languette (7) se trouvent des ergots de guidage (5), tandis que sur le raccord supérieur imbriqué (2) il possède en haut des ergots de guidage (4) en dessous desquels se trouve un perçage (11) recevant le cran (8), et en dessous du perçage (11) sont réalises des perçages (6), les éléments du profilé en U étant assemblés en mettant en place le raccord supérieur imbriqué (2) au dessus du raccord élargi inférieur imbriqué (3), les ergots de guidage (4) du raccord supérieur imbriqué (2) étant introduits dans les évidements (12) du raccord élargi inférieur imbriqué (3), les ergots de guidage (5) du raccord élargi inférieur imbriqué (3) rentrant dans les perçages (6) du raccord supérieur imbriqué (2), et le cran (8) reste verrouillé dans le perçage (11) du raccord supérieur imbriqué (2).

2. Barre canal multi-élément selon la revendication 1, **caractérisé en ce que** chaque élément s'insérant sur le raccord élargi inséré (13) possède des ergots (15) et des évidements (17), tandis que sur le raccord intérieur inséré (14) il possède des ergots (16) et des évidements (18), les éléments du profilé en U inséré étant assemblés en introduisant le raccord intérieur inséré (14) horizontalement dans le raccord élargi inséré (13), les ergots (16) dans le raccord intérieur inséré (14) rentrant dans les évidements (17) du raccord élargi inséré (13), et les ergots (15) du raccord élargi inséré (13) rentrant dans les évidements (18) du raccord intérieur inséré (14).
